# EUROPÄISCHE PATENTSCHRIFT

(11) **EP 3 037 244 B1**
(45) Veröffentlichungstag und Bekanntmachung des Hinweises auf die Patenterteilung: **29.03.2017**
(21) Anmeldenummer: 14199830.2
(22) Anmeldetag: 22.12.2014
(51) Int. Cl.: B29C 63/04, B29C 45/14

(54) **Vorrichtung und Verfahren zum Umbugen einer überstehenden Dekorschicht an einem Werkstück**
Device and method for folding a decorative layer around a workpiece
Dispositif et procédé de rembordement d'une couche décorative faisant saillie sur une pièce

(43) Veröffentlichungstag der Anmeldung: 29.06.2016
(73) Patentinhaber: Dr. Stoffel, Kai Konstantin, 6020 Innsbruck (AT)
(72) Erfinder: Stoffel, Kai Konstantin, 6020 Innsbruck (AT); Peimpolt, Markus, 6020 Innsbruck (AT)
(74) Vertreter: Wunderlich, Rainer

(56) Entgegenhaltungen:
- WO-A1-99/43518
- DE-A1-102009 025 539
- DE-C1- 19 607 855

## Beschreibung

Die Erfindung betrifft eine Vorrichtung zum Umbugen einer überstehenden Dekorschicht an einem Werkstück, mit einer Halterung zum Aufnehmen und Halten des Werkstücks, mehreren Umbugstempeln zum Umlegen der überstehenden Dekorschicht und Anlegen an das Werkstück, wobei die Umbugstempel durch Stellzylinder zwischen einer Rückzugsposition und einer Umbugposition verstellbar sind, und einer Steuereinrichtung, durch welche zumindest die Stellzylinder betätigbar sind, gemäß dem Oberbegriff des Anspruchs 1.

Die Erfindung betrifft weiterhin ein Verfahren zum Umbugen einer überstehenden Dekorschicht an einem Werkstück, bei dem das Werkstück mit der überstehenden Dekorschicht auf einer Halterung angeordnet wird, die überstehende Dekorschicht durch Zustellen von mehreren Umbugstempeln umgelegt und an das Werkstück angelegt wird, wobei die Umbugstempel durch Stellzylinder betätigt werden, wobei die Stellzylinder mittels einer Steuereinrichtung gesteuert und dabei die Umbugstempel zwischen einer Rückzugsposition und einer Umbugposition verfahren werden, gemäß dem Oberbegriff des Anspruchs 9.

Umbugvorrichtungen werden insbesondere zur Endbearbeitung von Werkstücken eingesetzt, welche durch ein sogenanntes Hinterspritzen hergestellt sind. Dabei wird eine Dekorschicht, welche ein Textil, eine Folie, ein Papier etc. sein kann, in eine Spritzgießform eines Kunststoffwerkstückes eingelegt, so dass die Dekorschicht beim Spritzgießen integriert mit dem Werkstück verbunden wird. Bei diesem Hinterspritzen lässt sich ein gewisses seitliches Überstehen der flexiblen Dekorschicht gegenüber dem Werkstück nicht vermeiden oder wird sogar gewünscht. Beim Umbugen dieser überstehenden Dekorschicht wird diese nicht, wie häufig üblich, durch Abtrennen entfernt, sondern auf eine Rückseite des Werkstückes umgelegt und an die Werkstückrückseite angelegt. Damit erstreckt sich die Dekorschicht auch über einen Kantenbereich des Werkstückes hinaus, was insbesondere für Werkstücke mit höherer Wertanmutung gewünscht ist, wie sie etwa im Innenausbau eines Kraftfahrzeuges verlangt sind.

Es ist bekannt, das Umbugen auf einer Presse unter Verwendung von Keilschiebermechanismen durchzuführen, welche die Hubbewegung der Presse teilweise in eine seitliche Umlegbewegung der Umbugstempel umsetzen.

Eine derartige Umbugvorrichtung ist beispielsweise aus der DE 10 2009 025 539 A1 bekannt. Die mechanische Betätigung der Umbugstempel durch Keilschiebermechanismen ist zwar sehr zuverlässig. Allerdings sind derartige Keilschiebermechanismen mechanisch sehr aufwändig und damit teuer in der Herstellung. Zudem sind diese auch relativ verschleißanfällig. Des Weiteren müssen Keilschiebermechanismen selbst bei relativ kleinen Produktänderungen umfassend überarbeitet und angepasst werden.

Aus der WO 99/43518 A1 oder der US 2011/274921 A1 sind Umbugvorrichtungen bekannt, bei welchen zum Betätigen der Umbugstempel Stellzylinder eingesetzt werden. Durch die Anordnung einer Vielzahl von Stellzylindern kann so eine große Anzahl von Umbugstempeln zur Durchführung definierter Umbugbewegungen betätigt werden. Die Vielzahl der Komponenten birgt die Gefahr von Fehlfunktionen, welche zu Fehlteilen führen können. Es ist daher üblich, nach dem Umbugen diese Teile einer umfassenden Prüfung, insbesondere einer Sichtprüfung, zu unterziehen.

Der Erfindung liegt die **Aufgabe** zugrunde, eine Vorrichtung und ein Verfahren zum Umbugen einer überstehenden Dekorschicht an einem Werkstück anzugeben, welche einerseits flexiblen anpassbar sind und andererseits eine zuverlässige Ausgabe von Gutteilen ermöglichen.

Die Erfindung wird zum einen durch eine Vorrichtung mit den Merkmalen des Anspruchs 1 und zum anderen durch ein Verfahren mit den Merkmalen des Anspruchs 9 gelöst. Bevorzugte Ausführungsformen der Erfindung sind in den jeweils abhängigen Ansprüchen angegeben.

Die erfindungsgemäße Vorrichtung ist dadurch gekennzeichnet, dass die Steuereinrichtung ausgebildet ist, eine fehlerfreie Betätigung der Stellzylinder festzustellen, dass eine Markierungseinrichtung zum Aufbringen einer Markierung auf das Werkstück vorgesehen ist, und dass die Markierungseinrichtung zum Aufbringen einer Aufbringung von der Steuereinrichtung betätigbar ist, wenn eine fehlerfreie Betätigung der Stellzylinder beim Umbugen festgestellt ist.

Ein Aspekt der Erfindung besteht darin, dass die Umbugstempel durch Stellzylinder betätigt werden. Die Verwendung von Stellzylindern ermöglicht es, Verfahrwege und Formen der Umbugstempel relativ einfach zu ändern und so an Produktveränderungen anzupassen.

Nach einer Erkenntnis der Erfindung besteht eine wesentliche Ursache für Fehlteile beim Umbugen darin, dass einzelne Stellzylinder nicht fehlerfrei betätigt worden sind. Dies kann zum einen an einer Störung an dem Stellzylinder oder an einem nicht korrekt eingelegten und eingespannten Werkstück liegen, wodurch der Hubweg eines oder mehrerer Stellzylinder gestört wird. Zur Feststellung von Fehlteilen ist gemäß der Erfindung die Steuereinrichtung so ausgebildet, dass diese eine korrekte und insbesondere vollständige Betätigung vorzugsweise aller Stellzylinder feststellt. Bei einer fehlerfreien Betätigung der Stellzylinder kann davon ausgegangen werden, dass das Umbugen korrekt erfolgt ist und ein fehlerfreies Werkstück vorliegt.

Ein weiterer Aspekt der Erfindung besteht zudem darin, dass bei einer fehlerfreien Betätigung der Stellzylinder durch die Steuereinrichtung eine Markierung mit einer Markierungseinrichtung auf das Werkstück aufgebracht wird. Somit kann auch nach dem Umbugen unmittelbar an dem Werkstück festgestellt werden, dass das Umbugen fehlerfrei erfolgt ist. Gleichzeitig bedeutet das Fehlen einer derartigen Markierung, dass bei dem Werkstück ein Fehler vorliegen kann. Die Markierung kann weitere Daten enthalten, welche als Zahlen, Buchstaben# oder Codes ausgeführt sind, etwa als Bar-Code oder QR-Code.

Insgesamt wird durch die Erfindung erreicht, dass eine Sichtprüfung des Werkstückes nach dem Umbugen in ganz erheblichem Maße vereinfacht wird oder sogar entfallen kann.

Gemäß einer bevorzugten Ausführungsform der Erfindung ist es vorteilhaft, dass mindestens eine Sensoreinrichtung vorgesehen ist, welche mit der Steuereinrichtung verbunden ist. Die Sensoreinrichtung kann dabei ein Weg- oder Positionssensor sein, welcher auch als eine Lichtschranke ausgebildet sein kann. Die Sensoren können auch als mechanische Sensoren, etwa Taster, ausgebildet sein, welche etwa durch Anschläge oder mechanische Nocken betätigt werden.

Eine weitere vorteilhafte Ausführungsform besteht darin, dass mindestens eine Sensoreinrichtung einem Stellzylinder zugeordnet ist, wobei durch die Sensoreinrichtung mindestens ein Erreichen einer Endposition eines Kolbens des Stellzylinders beim Umbugen ermittelbar ist. Hierzu kann ein optischer Positionssensor ein mechanischer Sensor oder ein magnetischer Zylindersensor (Endschalter) mit einem Taster vorgesehen werden, welcher durch Anschläge an dem Kolben des Stellzylinders bei Erreichen bestimmter Endpositionen betätigt wird. Durch die Sensoreinrichtung kann so bei jedem Stellzylinder festgestellt werden, ob der vorgesehene Verfahrweg des Kolbens des Stellzylinders korrekt ausgeführt worden ist. Eine korrekte oder fehlerhafte Ausführung ist so durch die Steuereinrichtung feststellbar. Bei einer fehlerhaften Ausführung kann ein Warnsignal, etwa ein rotes Licht und/oder ein akustischer Warnton ausgegeben werden. Gleichzeitig kann über die Steuereinrichtung eine Fehlermeldung an einen Monitor zur Überwachung des Fertigungsprozesses ausgegeben werden.

Eine weitere bevorzugte Ausführungsvariante der Erfindung ist darin zu sehen, dass mindestens eine Sensoreinrichtung an der Halterung für das Werkstück vorgesehen ist, wobei durch die Sensoreinrichtung das Vorhandensein des Werkstückes ermittelbar ist. Auch hier können optische mechanische, induktive oder kapazitive Sensoren an der Halterung zum Einsatz kommen. Insbesondere ist hierdurch feststellbar, ob ein Werkstück in der Halterung angeordnet ist und ob ein korrektes Werkstück eingespannt wurde.

Zur Befestigung der umgebugten Dekorschicht ist es nach einer Weiterbildung der Erfindung vorgesehen, dass mindestens ein Umbugstempel eine Heizeinrichtung, insbesondere eine elektrische Heizpatrone, aufweist. Durch ein Beheizen des Umbugstempels kann ein Anschmelzen des Werkstückes aus einem Kunststoffmaterial erfolgen, so dass die umgebugte Dekorschicht mit dem Werkstück verschweißt und somit zuverlässig fixiert ist. Die Heizeinrichtung kann eine Heizpatrone mit einer Heizleiterwicklung oder eine andere Heizeinheit sein, beispielsweise eine Ultraschallsonotrode, bei welcher die Heizenergie mittels Ultraschall eingebracht wird.

Es kann aber auch ein Heißverkleben erfolgen, wobei die Dekorschicht vorab mit einer Heißklebeschicht versehen wurde, welche durch den beheizten Umbugstempel aktiviert wird.

Eine weitere bevorzugte Ausführungsvariante der Erfindung besteht darin, dass die Markierungseinrichtung einen Prägestempel aufweist, welcher vorzugsweise beheizt ist. Mit dem Prägestempel kann eine Markierung insbesondere in ein Kunststoffteil eingeformt werden. Vorzugsweise ist der Prägestempel ähnlich wie die Umbugstempel durch einen Stellzylinder zwischen einer Rückzugsposition und einer Prägeposition verfahrbar. In der Prägeposition wird der Prägestempel mit einer definierten Kraft in das Werkstück, vorzugsweise eine Rückseite des Werkstückes, eingedrückt. Dabei kann der Prägestempel mit einer Heizeinrichtung versehen sein, wie sie zuvor im Zusammenhang mit dem Umbugstempel beschrieben worden ist. Der Prägestempel kann ein einfaches Zeichen sein, welches beispielsweise ein Teil als Gutteil kennzeichnet. An dem Prägestempel können aber auch Buchstaben, Nummern, Codes oder sonstige Identifizierungselemente auswechselbar oder veränderbar angeordnet sein, um weitere Informationen, etwa hinsichtlich Charge, Fertigungszeit etc. aufzubringen.

Eine weitere effiziente Markierungsweise wird nach einer Weiterbildung der Erfindung dadurch erreicht, dass die Markierungseinrichtung einen Drucker oder einen Markierungslaser aufweist, durch welche die Markierung unmittelbar auf eine Werkstückoberfläche aufbringbar ist. Der Drucker kann insbesondere ein Tintenstrahldrucker oder ein Stempel sein, mit welchem eine entsprechende Farbmarkierung oder ein Farbaufdruck auf die Oberfläche des Werkstücks aufgebracht wird. Alternativ kann ein Markierungslaser vorgesehen sein, welcher gesteuert von der Steuereinrichtung eine gewünschte Markierung und gegebenenfalls weitere Informationen in eine obere Werkstückschicht einbrennt.

Gemäß einer weiteren Ausführungsform der Erfindung ist es bevorzugt, dass die Markierungseinrichtung eine Auftragseinheit aufweist, durch welche ein Markierungselement auf das Werkstück aufbringbar, insbesondere aufklebbar ist. Die Auftragseinheit kann insbesondere ein Label oder ein Patch auf das Werkstück aufbringen. Üblicherweise weist das Markierungselement eine Klebeschicht auf, mit welcher dieses als ein Aufkleber fest an der Werkstückoberfläche aufklebbar ist. Bei einem derartigen Aufkleber kann zuvor mit einem Drucker, insbesondere einem Laserdrucker, eine gewünschte Information zur Markierung des Werkstückes als Gutteil und gegebenenfalls weiterer produkt- und/oder fertigungsrelevanter Daten aufgedruckt sein.

Hinsichtlich des Verfahrens ist die Erfindung dadurch gekennzeichnet, dass durch die Steuereinrichtung eine fehlerfreie Betätigung der Stellzylinder festgestellt wird und dass mittels einer Markierungseinrichtung eine Markierung auf das Werkstück aufgebracht wird, wenn die Steuereinrichtung eine fehlerfreie Betätigung der Stellzylinder beim Umbugen festgestellt wird.

Mit diesem erfindungsgemäßen Verfahren können die zuvor beschriebenen Vorteile bei dem Einsatz der erfindungsgemäßen Vorrichtung erreicht werden.

Eine bevorzugte Verfahrensvariante der Erfindung besteht darin, dass die Markierung in das Werkstück eingeprägt oder mit einem Drucker oder Markierungslaser auf das Werkstück aufgebracht wird. Es liegt somit eine feste und gut erkennbare Markierung an dem Werkstück vor, anhand welcher ersichtlich ist, dass das Werkstück korrekt gefertigt worden ist. Zudem kann die Markierung weitere produkt- und fertigungsrelevante Daten aufweisen, so dass auch zu einem späteren Zeitpunkt nachvollziehbar ist, wann, auf welcher Maschine und durch welche Bearbeiter das Werkstück gefertigt worden ist.

Eine weitere vorteilhafte Ausführungsform des erfindungsgemäßen Verfahrens liegt darin, dass ein Markierungselement auf das Werkstück aufgeklebt wird. Das Markierungselement kann durch eine Auftragseinheit, etwa eine Aufklebevorrichtung, auf das Werkstück aufgebracht werden. An dem Markierungselement können notwendige Daten zuvor aufgebracht, insbesondere als Bar-Code oder QR-Code aufgedruckt worden sein.

Die Erfindung wird nachfolgend anhand von bevorzugten Ausführungsbeispielen weiter beschrieben, welche schematisch in den beigefügten Zeichnungen dargestellt sind. In den Zeichnungen zeigen:
- Fig. 1: eine Draufsicht auf eine erfindungsgemäße Vorrichtung zum Umbugen;
- Fig. 2: eine Querschnittsansicht gemäß dem Schnitt A-A durch die Vorrichtung von Fig. 1 in einer vergrößerten Darstellung;
- Fig.3: eine perspektivische Detailansicht eines Umbugstempels mit Stellzylinder aus der Vorrichtung von Fig. 1;
- Fig. 4: ein Detail einer erfindungsgemäßen Vorrichtung mit Markierungseinrichtung;
- Fig. 5: eine perspektivische Detailansicht der Markierungseinrichtung für eine erfindungsgemäße Vorrichtung gemäß Fig. 4; und
- Fig. 6: eine vergrößerte Detailansicht gemäß dem Detail A aus Fig. 5.

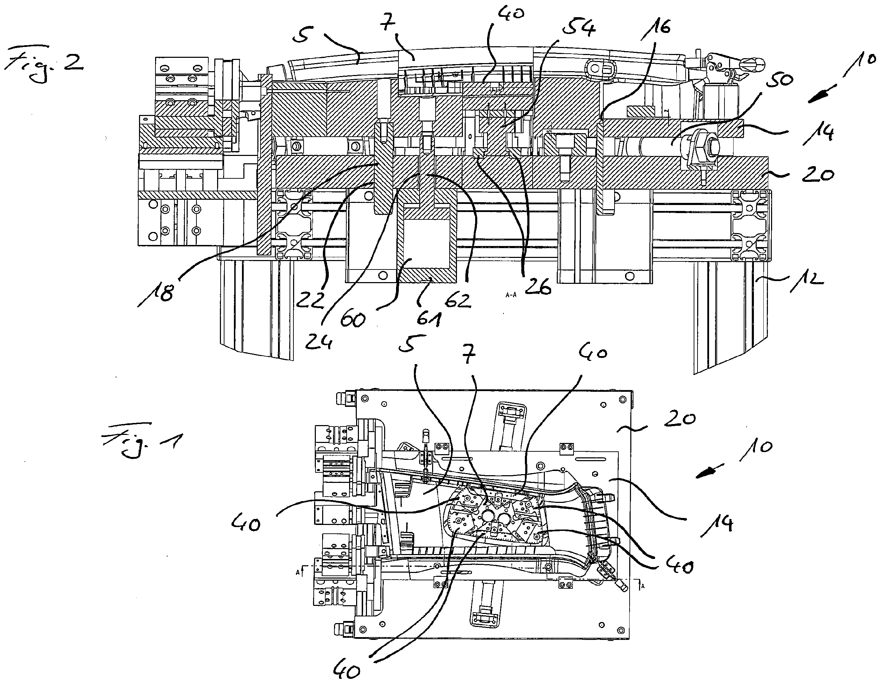

Eine erfindungsgemäße Vorrichtung 10 zum Umbugen gemäß den Figuren 1 und 2 weist ein tischförmiges Grundgestell 12 auf dessen Oberseite eine Grundplatte 20 befestigt ist. Oberhalb der Grundplatte 20 ist eine plattenförmige Halterung 14 angeordnet, welche zur Aufnahme und Halterung eines Werkstückes 5 mit einer mittigen Werkstücköffnung 7 ausgebildet ist. Das Werkstück 5 ist ein durch Hinterspritzen hergestelltes Kunststoffteil, welches an einer Vorderseite, mit welcher das Werkstück 5 auf der Halterung 14 aufliegt, eine nicht dargestellte Dekorschicht aus einem flexiblen Textilmaterial aufweist. Die flexible Dekorschicht steht an den Rändern, insbesondere der Werkstücköffnung 7 über und soll mittels der dargestellten Vorrichtung 10 auf eine Werkstückrückseite umgebugt werden.

An der Unterseite der plattenförmigen Halterung 14 sind mehrere Führungsbolzen 18 befestigt, welche sich nach unten erstrecken und passend und gleitend in Führungsbohrungen 22 in der Grundplatte 20 aufgenommen werden. Die Halterung 14 ist so gegenüber der Grundplatte 20 in Hubrichtung verschiebbar gelagert. An der Unterseite der Grundplatte 20 ist eine Zylinderanordnung 60 angebracht. Von der Hubzylinderanordnung 60 ist lediglich ein einzelner Hubzylinder 61 dargestellt. Eine Kolbenstange 62 des Hubzylinders 61 erstreckt sich nach oben durch einen Durchbruch 24 in der Grundplatte 20. Die Kolbenstange 62 ist über eine Schraubverbindung mit der Unterseite der Halterung 14 fest verbunden.

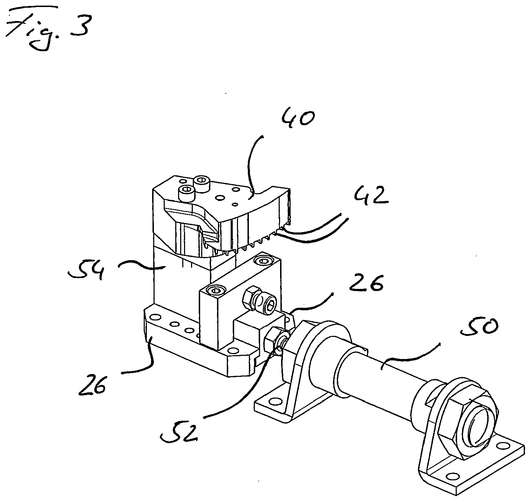

Mittels der Hubzylinderanordnung 60 kann die Halterung 14 gegenüber der Grundplatte 20 in eine vertikale Hubrichtung nach oben und unten verfahren werden. An der Oberseite der Grundplatte 20 ist über Führungsleisten 26 jeweils ein Verbindungsglied 54 zu einem Umbugstempel 40 horizontal verschiebbar gelagert. Eine horizontale Verschiebebewegung zwischen einer Rückzugsposition und einer Umbugposition wird mittels eines Stellzylinders 50 bewirkt. Die Anordnung mit dem Stellzylinder 50 wird nachfolgend im Zusammenhang mit Fig. 3 näher beschrieben.

Wie insbesondere aus der Draufsicht von Fig. 1 zu entnehmen ist, sind innerhalb des Umfanges des Werkstückes 7 insgesamt sechs Umbugstempel 40 ringförmig verteilt entlang des Öffnungsrandes angeordnet.

Die Betätigung eines Umbugstempels 40 wird im Zusammenhang mit Fig. 3 erläutert. Der blockförmige Umbugstempel 40 weist an seiner das Werkstück 5 beziehungsweise die Dekorschicht kontaktierenden Druckseite Prägevorsprünge 42 auf. Die Prägevorsprünge 42 dienen einem punkt- oder linienförmigen An- und Einpressen der Dekorschicht an der Rückseite des Werkstückes 5. Der plattenförmige Umbugstempel 40 ist über eine Schraubbefestigung an einem L-förmigen Verbindungsglied 54 angebracht. Das Verbindungsglied 54 ist verschiebbar entlang von zwei gegenüberliegenden Führungsleisten 26 gelagert. Das Verbindungsglied 54 liegt dabei auf der in Fig. 3 nicht dargestellten Grundplatte 20 auf. Ebenfalls auf der Grundplatte 20 befestigt ist der in Fig. 3 dargestellte Stellzylinder 50, welcher als ein Pneumatikzylinder ausgebildet ist. Die Darstellung von Fig. 3 zeigt den Umbugstempel 40 in seiner radial ausgefahrenen Position, wobei der radial außen liegende Stellzylinder 50 eingefahren ist. Nach Ausfahren einer Stellzylinderstange 52, welche mit dem Verbindungsglied 54 verschraubt ist, kann das Verbindungsglied 54 und der daran angebrachte Umbugstempel 40 radial nach innen in eine Rückzugsposition zurückgefahren werden, welche in Fig. 1 dargestellt ist. In dieser Rückzugsposition ist das Werkstück 5 aus der Halterung 14 entnehmbar und darin einsetzbar.

Zur Durchführung des Umbugverfahrens nach der Erfindung werden die insgesamt sechs dargestellten Umbugstempel 40 durch ihre jeweils zugeordneten Stellzylinder 50 horizontal und radial nach außen gefahren, so dass die Umbugstempel 40 in ihrer Umbugposition über den Rand der Werkstücköffnung 7 ragen. Anschließend wird durch Ausfahren der Hubkolbenstange 62 der Hubzylinder 61 der Hubzylinderanordnung 60 die Halterung 14 mit dem Werkstück 5 vertikal gegenüber der Grundplatte 20 nach oben gefahren. Dabei wird das Werkstück 5 und die überstehende Dekorschicht gegen die an der Grundplatte 20 angeordneten Umbugstempel 40 mit ihren Prägevorsprüngen 42 gedrückt. Auf diese Weise wird die überstehende Dekorschicht auf die Rückseite des Werkstückes 5 umgelegt und daran angepresst. Es kann in dieser Position ein Verschweißen oder Heißverkleben zur Befestigung der überstehenden Dekorschicht erfolgen.

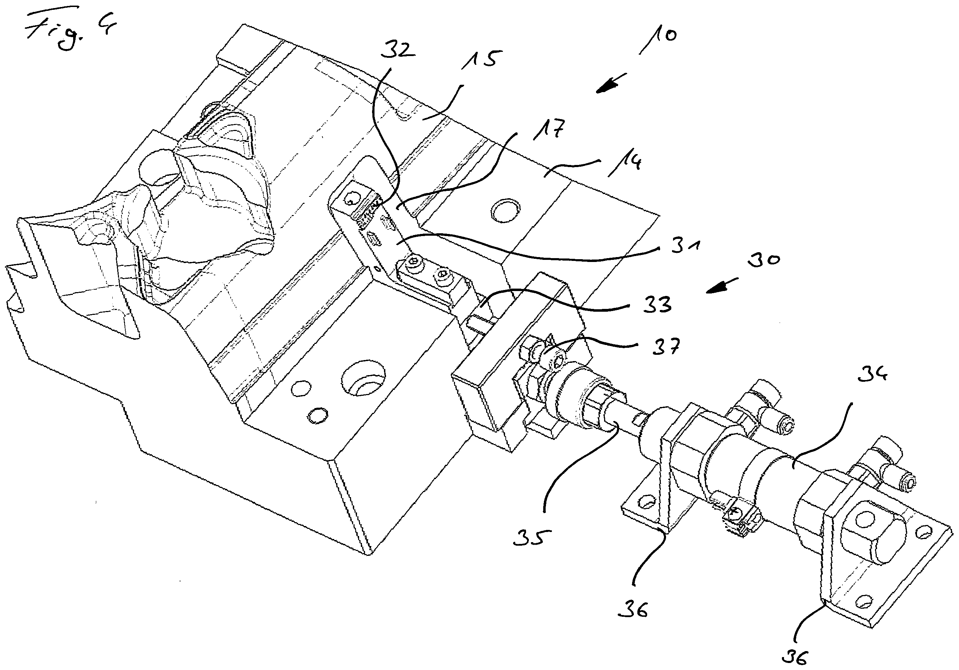

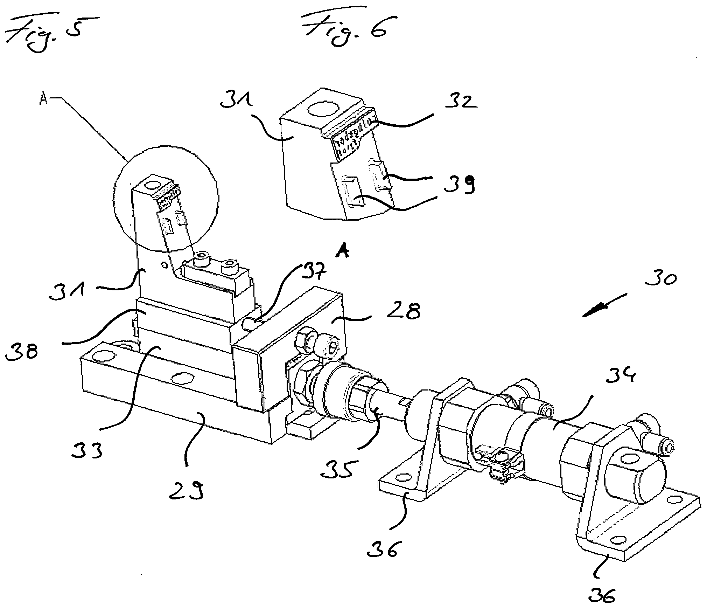

In Zusammenhang mit den Figuren 4 bis 6 ist eine Markierungseinrichtung 30 für eine erfindungsgemäße Umbugvorrichtung 10 beschrieben. An der Halterung 14 für das Werkstück 5 ist im Bereich der konvexen Aufnahmekontur 15, auf welcher eine Rückseite des umzubugenden Werkstückes 5 aufliegt, eine schlitzartige Ausnehmung 17 ein Prägestempel 31 der Markierungseinrichtung 30 horizontal verschiebbar gelagert. Der etwa L-förmig ausgebildete Prägestempel 31 weist in seinem oberen Bereich eine nach außen weisende Markierung 32 auf, welche in eine Rückseite des Werkstückes 5 eingeprägt wird.

Der Prägestempel 31 ist über ein blockartiges Zwischenelement 38 auf einem Schieber 33 befestigt, welcher verschiebbar in einer Schiebeführung 29 in der Halterung 14 gelagert ist. Über einen Stellzylinder 34 mit einer Zylinderstange 35, welche an dem Schieber 33 befestigt ist, ist der Prägestempel 31 zwischen einer Rückzugsposition und einer Prägeposition verstellbar.

In der Rückzugsposition ist der Prägestempel 31 in die schlitzförmige Ausnehmung 17 so eingefahren, dass die Markierung 32 beabstandet von der Rückseite des Werkstückes 5 ist. Durch Einfahren der Zylinderstange 35 in den Stellzylinder 34 wird der Prägestempel 31 aus der Rückzugsposition in die Prägeposition ausgefahren, wobei die Markierung 32 an dem Prägestempel 31 in das Werkstück 5 eingedrückt wird, so dass sich ein Negativ der Markierung 32 in dem Werkstück 5 abbildet. Der Prägestempel 31 ist dabei durch eine nicht dargestellte Heizvorrichtung beheizt.

Über eine an der Schiebeführung 29 angeordnete Justierplatte 28 ist eine Justierschraube 37 verstellbar gelagert. Das freie Schraubenende der Justierschraube 37 bildet einen Anschlag für das Zwischenelement 38 und damit den Schieber 33. Mit der Justierschraube 37 ist so die maximale Ausfahrposition des Prägestempels 31 in der Prägeposition exakt einstellbar. Der Stellzylinder 34 ist über zwei Lagerböcke 38 an der Halterung14 oder einem Halteelement der Vorrichtung 10 befestigt.

## Patentansprüche

1. Vorrichtung zum Umbugen einer überstehenden Dekorschicht an einem Werkstück (5), mit
- einer Halterung (14) zum Aufnehmen und Halten des Werkstücks (5),
- mehreren Umbugstempeln (40) zum Umlegen der überstehenden Dekorschicht und Anlegen an das Werkstück (5), wobei die Umbugstempel (40) durch Stellzylinder (50) zwischen einer Rückzugsposition und einer Umbugposition verstellbar sind, und
- einer Steuereinrichtung, durch welche zumindest die Stellzylinder (50) betätigbar sind,
**dadurch gekennzeichnet,**
- **dass** die Steuereinrichtung ausgebildet ist, eine fehlerfreie Betätigung der Stellzylinder (50) festzustellen,
- **dass** eine Markierungseinrichtung (30) zum Aufbringen einer Markierung (32) auf das Werkstück (5) vorgesehen ist, und
- **dass** die Markierungseinrichtung (30) zum Aufbringen einer Markierung (32) von der Steuereinrichtung betätigbar ist, wenn eine fehlerfreie Betätigung der Stellzylinder (50) beim Umbugen festgestellt ist.

2. Vorrichtung nach Anspruch 1,
**dadurch gekennzeichnet,**
**dass** mindestens eine Sensoreinrichtung vorgesehen ist, welche mit der Steuereinrichtung verbunden ist.

3. Vorrichtung nach Anspruch 2,
**dadurch gekennzeichnet,**
**dass** mindestens eine Sensoreinrichtung einem Stellzylinder (50) zugeordnet ist, wobei durch die Sensoreinrichtung zumindest ein Erreichen der Endposition einer Kolbenstange (52) des Stellzylinders (50) beim Umbugen ermittelbar ist.

4. Vorrichtung nach Anspruch 2 oder 3,
**dadurch gekennzeichnet,**
**dass** mindestens eine Sensoreinrichtung an der Halterung (14) für das Werkstück (5) vorgesehen ist, wobei durch die Sensoreinrichtung das Vorhandensein des Werkstückes (5) ermittelbar ist.

5. Vorrichtung nach einem der Ansprüche 1 bis 4,
**dadurch gekennzeichnet,**
**dass** mindestens ein Umbugstempel (40) eine Heizeinrichtung, insbesondere eine elektrische Heizpatrone aufweist.

6. Vorrichtung nach einem der Ansprüche 1 bis 5,
**dadurch gekennzeichnet,**
**dass** die Markierungseinrichtung (30) einen Prägestempel (31) aufweist, welcher vorzugsweise beheizt ist.

7. Vorrichtung nach einem der Ansprüche 1 bis 6,
**dadurch gekennzeichnet,**
**dass** die Markierungseinrichtung (30) einen Drucker oder einen Markierungslaser aufweist, durch welche die Markierung (32) unmittelbar auf eine Oberfläche des Werkstücks (5) aufbringbar ist.

8. Vorrichtung nach einem der Ansprüche 1 bis 7,
**dadurch gekennzeichnet,**
**dass** die Markierungseinrichtung (30) eine Auftragseinheit aufweist, durch welche ein Markierungselement auf das Werkstück (5) aufbringbar, insbesondere aufklebbar ist.

9. Verfahren zum Umbugen einer überstehenden Dekorschicht an einem Werkstück (5), bei dem
- das Werkstück (5) mit der überstehenden Dekorschicht auf einer Halterung (14) angeordnet wird, und
- die überstehende Dekorschicht durch Zustellen von mehreren Umbugstempeln (40) umgelegt und an das Werkstück (5) angelegt wird, wobei die Umbugstempel (40) durch Stellzylinder (50) betätigt werden,
- wobei die Stellzylinder (50) mittels einer Steuereinrichtung gesteuert und dabei die Umbugstempel (40) zwischen einer Rückzugsposition und einer Umbugposition verfahren werden,
**dadurch gekennzeichnet,**
- **dass** durch die Steuereinrichtung eine fehlerfreie Betätigung der Stellzylinder (50) festgestellt wird und
- **dass** mittels einer Markierungseinrichtung (30) eine Markierung (32) auf das Werkstück (5) aufgebracht wird, wenn durch die Steuereinrichtung eine fehlerfreie Betätigung der Stellzylinder (50) beim Umbugen festgestellt wird.

10. Verfahren nach Anspruch 9,
**dadurch gekennzeichnet,**
**dass** die Markierung (32) in das Werkstück (5) eingeprägt oder mit einem Drucker oder Markierungslaser auf das Werkstück (5) aufgebracht wird.

11. Verfahren nach Anspruch 9 oder 10,
**dadurch gekennzeichnet,**
**dass** ein Markierungselement auf das Werkstück (5) aufgeklebt wird.

## Claims

1. Device for edge-folding a protruding decorative layer on a workpiece (5), having
- a holder (14) for receiving and holding the workpiece (5),
- several edge-folding dies (40) for folding over the protruding decorative layer and placing it against the workpiece (5), wherein the edge-folding dies (40) are adjustable by positioning cylinders (50) between a retracted position and an edge-folding position, and
- a control means, by which at least the positioning cylinders (50) can be actuated,
**characterized in that**
- the control means is designed to determine an error-free actuation of the positioning cylinders (50),
- a marking means (30) is provided for applying a mark (32) onto the workpiece (5), and
- to apply a mark (32) the marking means (30) can be actuated by the control means when an error-free actuation of the positioning cylinders (50) during edge-folding has been determined.

2. Device according to claim 1,
**characterized in that**
at least one sensor means is provided which is connected to the control means.

3. Device according to claim 2,
**characterized in that**
at least one sensor means is assigned to a positioning cylinder (50), wherein by the sensor means at least a reaching of the end position of a piston rod (52) of the positioning cylinder (50) during edge-folding can be detected.

4. Device according to claim 2 or 3,
**characterized in that**
at least one sensor means is provided on the holder (14) for the workpiece (5), wherein by the sensor means the presence of the workpiece (5) can be detected.

5. Device according to any one of claims 1 to 4,
**characterized in that**
at least one edge-folding die (40) has a heating means, in particular an electric heating cartridge.

6. Device according to any one of claims 1 to 5,
**characterized in that**
the marking means (30) has an embossing die (31) which is preferably heated.

7. Device according to any one of claims 1 to 6,
**characterized in that**
the marking means (30) has a printer or a marking laser, by which the mark (32) can be applied directly onto a surface of the workpiece (5).

8. Device according to any one of claims 1 to 7,
**characterized in that**
the marking means (30) has an application unit, by which a marking element can be applied, in particular adhesively bonded to the workpiece (5).

9. Method for edge-folding a protruding decorative layer on a workpiece (5), in which
- the workpiece (5) with the protruding decorative layer is arranged on a holder (14), and
- by advancing several edge-folding dies (40) the protruding decorative layer is folded over and placed against the workpiece (5), wherein the edge-folding dies (40) are actuated by positioning cylinders (50),
- wherein the positioning cylinders (50) are controlled by means of a control means and in doing so the edge-folding dies (40) are moved between a retracted position and an edge-folding position,
**characterized in that**
- by the control means an error-free actuation of the positioning cylinders (50) is determined and
- by means of a marking means (30) a mark (32) is applied onto the workpiece (5) when an error-free actuation of the positioning cylinders (50) during edge-folding has been determined by the control means.

10. Method according to claim 9,
**characterized in that**
the mark (32) is embossed into the workpiece (5) or applied by a printer or marking laser onto the workpiece (5).

11. Method according to claim 9 or 10,
**characterized in that**
a marking element is adhesively bonded to the workpiece (5).

## Revendications

1. Dispositif de rembordement d'une couche décorative faisant saillie sur une pièce (5), avec
- un support (14) servant à recevoir et à maintenir la pièce (5),
- plusieurs matrices de rembordement (40) servant à replier contre la pièce (5) la couche décorative faisant saillie, dans lequel la matrice de rembordement (40) peut être ajustée par des cylindres de réglage (50) entre une position de retour et une position de rembordement, et
- un système de commande, par lequel au moins les cylindres de réglage (50) peuvent être actionnés,
**caractérisé en ce**
- **que** le système de commande est réalisé afin de constater si l'actionnement des cylindres de réglage (50) est sans erreurs,
- **qu'**un système de marquage (30) est prévu afin d'appliquer un repère (32) sur la pièce (5), et
- **que** le système de marquage (30) servant à appliquer un repère (32) peut être actionné par le système de commande s'il est constaté que l'actionnement des cylindres de réglage (50) lors du rembordement est sans erreurs.

2. Dispositif selon la revendication 1,
**caractérisé en ce**
**qu'**au moins un système de capteur est prévu, lequel est relié au système de commande.

3. Dispositif selon la revendication 2,
**caractérisé en ce**
**qu'**au moins un système de capteur est associé au cylindre de réglage (50), dans lequel le système de capteur permet de déterminer au moins que la position finale d'une tige de piston (52) du cylindre de réglage (50) lors du rembordement a été atteinte.

4. Dispositif selon la revendication 2 ou 3,
**caractérisé en ce**
**qu'**au moins un système de capteur est prévu au niveau du support (14) pour la pièce (5), dans lequel le système de capteur permet de déterminer la présence de la pièce (5).

5. Dispositif selon l'une quelconque des revendications 1 à 4,
**caractérisé en ce**
**qu'**au moins une matrice de rembordement (40) présente un système de chauffage, en particulier une cartouche de chauffage électrique.

6. Dispositif selon l'une quelconque des revendications 1 à 5,
**caractérisé en ce**
**que** le système de marquage (30) présente une matrice d'estampage (31), qui est de préférence chauffée.

7. Dispositif selon l'une quelconque des revendications 1 à 6,
**caractérisé en ce**
**que** le système de marquage (30) présente une imprimante ou un laser de marquage, laquelle ou lequel permet d'appliquer le repère (32) directement sur une surface de la pièce (5).

8. Dispositif selon l'une quelconque des revendications 1 à 7,
**caractérisé en ce**
**que** le système de marquage (30) présente une unité d'application, laquelle permet d'appliquer, en particulier de coller, un élément de marquage sur la pièce (5).

9. Procédé de rembordement d'une couche décorative faisant saillie sur une pièce (5), où
- la pièce (5) avec la couche décorative faisant saillie est disposée sur un support (14), et
- la couche décorative faisant saillie est repliée contre la pièce (5) par le rapprochement de plusieurs matrices de rembordement (40), dans lequel les matrices de rembordement (40) sont actionnées par des cylindres de réglage (50),
- dans lequel les cylindres de réglage (50) sont commandés au moyen d'un système de commande et les matrices de rembordement (40) sont ce faisant déplacées entre une position de retour et une position de rembordement,
**caractérisé en ce**
- **que** le système de commande permet de constater si l'actionnement des cylindres de réglage (50) est sans erreurs, et
- **qu'**un repère (32) est appliqué sur la pièce (5) au moyen d'un système de marquage (30) si le système de commande constate que l'actionnement des cylindres de réglage (50) lors du rembordement est sans erreurs.

10. Procédé selon la revendication 9,
**caractérisé en ce**
**que** le repère (32) est estampé sur la pièce (5) ou est appliqué sur la pièce (5) à l'aide d'une imprimante ou d'un laser de marquage.

11. Procédé selon la revendication 9 ou 10,
**caractérisé en ce**
**qu'**un élément de marquage est collé sur la pièce (5).
